# EUROPÄISCHE PATENTSCHRIFT

(11) **EP 1 145 941 B1**
(45) Veröffentlichungstag und Bekanntmachung des Hinweises auf die Patenterteilung: **23.03.2005**
(21) Anmeldenummer: 01103282.8
(22) Anmeldetag: 13.02.2001
(51) Int. Cl.: B62D 33/07

(54) **Lagerung einer Fahrerkabine an einem Fahrzeugrahmen**
Supportive bearing between the drivers' cabin and a vehicle frame
Palier de support entre la cabine conducteur et un chassis

(30) Priorität: 11.04.2000 DE 10017858
(43) Veröffentlichungstag der Anmeldung: 17.10.2001
(73) Patentinhaber: Carl Freudenberg KG, 69469 Weinheim (DE)
(72) Erfinder: Hamaekers, Arno, 69517 Gorxheimertal (DE); Rudolph, Axel, 64342 Seeheim/Jugenheim (DE); Simuttis, Arnold, Dr., 55545 Bad Kreuznach (DE)

(56) Entgegenhaltungen:
- WO-A-97/08038
- US-A- 4 082 342
- US-A- 4 090 731

## Beschreibung

### Technisches Gebiet

Die vorliegende Erfindung betrifft eine Lagerung einer Fahrerkabine an einem Fahrzeugrahmen mit einem ersten und einem zweiten Lagerteil, wobei das eine von diesen an der Fahrerkabine und das andere am Fahrzeugrahmen vorgesehen ist, und mit einer zwischen Fahrzeugrahmen und Fahrerkabine wirkenden Schwingungsdämpfung, wobei das erste Lagerteil ein inneres Verankerungsteil und ein relativ zu dem inneren Verankerungsteil bewegbares äußeres Verankerungsteil aufweist, wobei das äußere Verankerungsteil das innere Verankerungsteil radial umschließt und wobei zwischen dem inneren und dem äußeren Verankerungsteil ein Federkörper wirkt.

### Stand der Technik

Eine solche Lagerung einer Fahrerkabine an einem Fahrzeugrahmen ist aus der WO 97/08038 bekannt.

Die in der WO 97/08038 beschriebene Lagerung weist ein zwischen Fahrzeugrahmen und Fahrerkabine vorgesehenes Gummilager auf, dessen radial äußerer Teil mit einer Vielzahl von Schrauben an der Fahrerkabine und dessen radial inneres Teil über eine Schraube mit dem Fahrzeugrahmen verbunden ist. Dabei sind zwischen dem Gummilager und dem Fahrzeugrahmen ein Stoßdämpfer und eine parallel dazu wirkende Feder angeordnet. Die aus der WO 97/08038 bekannte Lagerung ist nicht derart ausgebildet, dass sie zur Erleichterung von Service- und Pflegemaßnahmen mit einfachen Mitteln gelöst werden kann, beispielsweise um ein Anheben der Fahrerkabine zu ermöglichen. Darüber hinaus hat die bekannte Lagerung den Nachteil, dass sie aufgrund des komplexen Aufbaus, welcher einen Gummikörper, eine separate Feder sowie einen separaten Stoßdämpfer umfasst, in der Herstellung und in der Montage hohe Kosten verursacht.

### Darstellung der Erfindung

Der Erfindung liegt die Aufgabe zugrunde, eine Lagerung anzugeben, die einerseits die Durchführung von Servicemaßnahmen erleichtert und andererseits kostengünstig herstellbar und mit geringem Aufwand montierbar ist.

Diese Aufgabe wird bei einer Lagerung der eingangs genannten Art dadurch gelöst, dass die Fahrerkabine relativ zu dem Fahrzeugrahmen insbesondere schwenkend aus einer Fahrposition in eine Serviceposition angehoben und aus der Serviceposition in die Fahrposition abgesenkt werden kann, daß das erste und das zweite Lagerteil beim Anheben der Fahrerkabine in die Serviceposition von einander getrennt und beim Absenken in die Fahrposition wieder zusammengefügt werden, dass in der Fahrposition das zweite Lagerteil in einer an dem inneren Verankerungsteil ausgebildeten Aufnahme angeordnet ist und dass eine Zentriervorrichtung vorgesehen ist, die beim Absenken der Fahrerkabine in die Fahrposition das erste Lagerteil relativ zu dem zweiten Lagerteil ausrichtet.

Bei der erfindungsgemäßen Gestaltung wird eine besonders hohe Servicefreundlichkeit dadurch erzielt, dass die Fahrerkabine beispielsweise eines Lkws relativ zu dem Fahrzeugrahmen in eine Serviceposition angehoben werden kann. Dabei werden vorzugsweise zwei erste Lagerteile links und rechts der Fahrzeuglängsachse zwischen Fahrerkabine und Fahrzeugrahmen angeordnet. Die Fahrerkabine kann dann über einen in deren vorderen Bereich liegenden Drehpunkt aus der Fahrposition in die angehobene Serviceposition bewegt werden. Weiterhin ermöglicht die erfindungsgemäße Gestaltung eine besonders kompakte Bauweise, da das erste Lagerteil eine Vielzahl von Funktionen vereint, für die bisher mehrere separate Bauteile erforderlich waren.

Eine besonders stabile Konstruktion wird dadurch erreicht, dass das erste Lagerteil als Zapfen ausgebildet ist, von dem wenigstens ein Abschnitt in der Aufnahme aufnehmbar ist.

Eine besonders einfache Konstruktion wird dadurch erreicht, dass die Zentriervorrichtung durch eine erste an dem ersten Lagerteil ausgebildete Führungsfläche und eine mit dieser zusammenwirkende zweite Führungsfläche, welche an der Aufnahme ausgebildet ist, gebildet wird.

Gemäß einer Weiterbildung dieses Erfindungsgedankens ist vorgesehen, daß die erste und/oder die zweite Führungsfläche derart geneigt sind, daß das erste Lagerteil beim Einführen in die Aufnahme zentriert wird.

Die Lagerung ist dann besonders kostengünstig herstellbar, wenn das innere Verankerungsteil als Ring ausgebildet ist, dessen Ringöffnung die Aufnahme bildet.

Eine besonders einfache und kompakte Bauweise kann dadurch erreicht werden, dass der Ring wenigstens abschnittsweise einen sich in Einführrichtung des ersten Lagerteils insbesondere kegelförmig verringernden Durchmesser hat.

Unerwünschtes Spiel zwischen Fahrerkabine und Fahrzeugrahmen kann dadurch verhindert werden, dass an dem Ring an dessen der Fahrerkabine zugewandten Seite ein radial nach außen erweiterter Abschnitt vorgesehen ist, der eine Auflage für einen Stützkörper bildet.

Vorteilhafterweise ist vorgesehen, dass eine Verriegelung vorgesehen ist, durch die die Fahrerkabine in der Fahrposition festgelegt wird.

Eine besonders stabile Verriegelung wird dadurch erreicht, dass die Verriegelung ein Verriegelungselement aufweist, dass den radial nach außen erweiterten Abschnitt hintergreift.

Eine andere vorteilhafte Art der Verriegelung besteht darin, dass die Verriegelung ein Verriegelungselement aufweist, das zwischen dem zweiten Lagerteil und dem inneren Verankerungsteil wirkt.

Eine weitere Verbesserung kann dadurch erreicht werden, dass an dem Ring an dessen der Fahrerkabine abgewandten Seite ein radial nach außen erweiterter Abschnitt vorgesehen ist, der mit dem äußeren Verankerungsteil eine Abreißsicherung bildet. Hierdurch werden unzulässige Bewegungen der Fahrerkabine relativ zum Fahrzeugrahmen auch beim Versagen des Federkörpers, beispielsweise infolge eines Unfalls, vermieden.

Eine Verbesserung der Schwingungsisolation der Fahrerkabine wird dadurch erreicht, dass eine zwischen dem ersten und zweiten Lagerteil wirkende hydraulische Dämpfung vorgesehen ist.

Gemäß einer Weiterbildung dieses Erfindungsgedankens ist es vorgesehen, dass zur hydraulischen Dämpfung eine mit Dämpfungsflüssigkeit gefüllte erste Kammer und eine von dieser getrennte und über einen Durchlass flüssigkeitsleitend mit der ersten Kammer verbundene zweite Kammer vorgesehen ist, wobei das Volumen der ersten Kammer bei einer Relativbewegung von erstem und zweitem Lagerteil verändert wird, so dass Dämpfungsflüssigkeit in dem Durchlass zwischen erster und zweiter Kammer bewegt wird. Aufgrund einer solchen Gestaltung können auftretende Schwingungen besonders wirkungsvoll reduziert werden.

Eine besonders kompakte Bauform wird dadurch erreicht, dass die erste Kammer und/oder die zweite Kammer zwischen dem inneren und dem äußeren Verankerungsteil angeordnet sind.

Dabei begrenzt vorteilhafterweise der Federkörper die erste Kammer wenigstens abschnittsweise.

Eine weitere Verbesserung kann dadurch erreicht werden, dass der Durchlass durch einen von dem inneren Verankerungsteil und dem äußeren Verankerungsteil begrenzten Spalt gebildet wird.

Von Vorteil weist dabei das äußere Verankerungsteil zur Bildung des Spaltes ein Drosselelement auf, welches sich um das innere Verankerungsteil erstreckt.

Eine Nachgiebigkeit auch in Querrichtung wird dadurch erreicht, dass das Drosselelement aus elastischem Werkstoff besteht und insbesondere einstückig mit dem Federkörper ausgebildet ist. Durch die einstückige Gestaltung von elastomerem Federkörper und Drosselelement können die Fertigungskosten weiter reduziert werden.

Eine besonders gute Schwingungsdämpfung wird dadurch erreicht, dass das Drosselelement einen zur zweiten Kammer hinweisenden im wesentlichen zylindrischen Abschnitt aufweist, wobei der zylindrische Abschnitt in seiner Bodenfläche eine Durchbrechung aufweist, welche mit dem inneren Verankerungsteil den Spalt bildet.

### Kurzbeschreibung der Zeichnungen

- Figur 1: zeigt eine Lagerung einer Fahrerkabine an einen Fahrzeugrahmen gemäß einer ersten Ausführungsform.
- Figur 2: zeigt eine Lagerung einer Fahrerkabine an einen Fahrzeugrahmen gemäß einer zweiten Ausführungsform.

### Ausführung der Erfindung

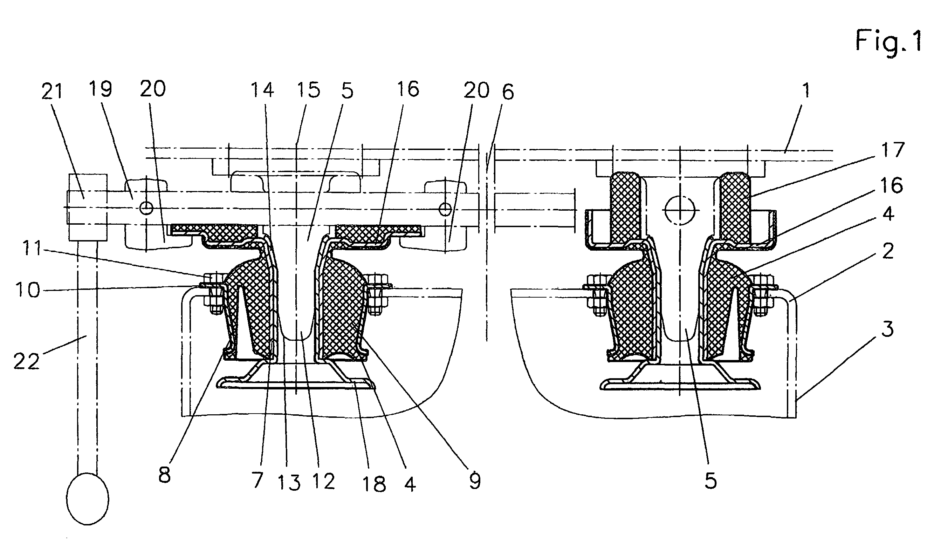

In Figur 1 ist ein unterer Abschnitt einer Fahrerkabine 1 dargestellt, die an einem der Fahrerkabine 1 zugewandten Halteabschnitt 2 des Fahrzeugrahmens 3 angeordnet ist. Dabei ist in einem hinteren Abschnitt der Fahrerkabine 1 ein erstes Lagerteil 4, welches an dem Halteabschnitt 2 des Fahrzeugrahmens 3 festgelegt ist, und ein zweites Lagerteil 5 vorgesehen, welches an der Fahrerkabine 1 festgelegt ist. Dabei sind zur besseren Aufnahme der auftretenden Kräfte beiderseits der vertikalen Fahrzeugmittelachse 6 jeweils ein erstes Lagerteil 4 und ein zweites Lagerteil 5 angeordnet.

Die Fahrerkabine 1 kann über eine im vorderen Bereich der Fahrerkabine 1 liegende Drehachse (nicht dargestellt) aus der in Figur 1 dargestellten Fahrposition in eine Serviceposition angehoben werden und aus der Serviceposition in die Fahrposition wieder abgesenkt werden. Beim Anheben der Fahrerkabine 1 in die Serviceposition werden das erste Lagerteil 4 und das zweite Lagerteil 5 von einander getrennt und beim Absenken in die Fahrposition wieder zusammengefügt.

Das erste Lagerteil 4 ist als Buchsenlager ausgebildet, das ein inneres Verankerungsteil 7 und ein relativ zu dem inneren Verankerungsteil 7 bewegbares äußeres Verankerungsteil 8 aufweist, wobei das radial äußere Verankerungsteil 8 das innere Verankerungsteil 7 radial umschließt. Zwischen dem inneren und dem äußeren Verankerungsteil 7, 8 ist ein Federkörper 9 aus Elastomer angeordnet. Das äußere Verankerungsteil 8 ist als ein Ring ausgebildet, der über einen nach außen gebogenen Flansch 10 durch als Schrauben ausgebildete Verbindungsmittel 11 mit dem Halteabschnitt 2 des Fahrzeugrahmens 3 verbunden ist.

Das innere Verankerungsteil 7 ist als ein Ring ausgebildet, wobei dessen Ringöffnung eine Aufnahme für das zweite Lagerteil 5 bildet.

Das zweite Lagerteil 5 ist als ein Zapfen ausgebildet, von dem ein Abschnitt in der durch das innere Verankerungsteil 7 gebildeten Aufnahme aufgenommen ist, wenn sich die Fahrerkabine 1 in der Fahrposition befindet.

Weiterhin weist die erfindungsgemäße Lagerung eine Zentriervorrichtung auf, die beim Absenken der Fahrerkabine 1 aus der Serviceposition in die Fahrposition das erste Lagerteil 4 relativ zu dem zweiten Lagerteil 5 ausrichtet, damit dieses in der Aufnahme aufgenommen werden kann. Hierzu ist an dem zweiten Lagerteil 5 eine erste Führungsfläche 13 und an dem inneren Verankerungsteil 7 eine zweite Führungsfläche 14 ausgebildet, welche zusammenwirken und beim Absenken der Fahrerkabine 1 für eine Zentrierung sorgen. Die vorzugsweise rotationssymmetrisch ausgebildeten Führungsflächen 13, 14 sind derart zur Zapfenachse 15 geneigt, dass das zweite Lagerteil 5 beim Einführen in die Aufnahme zentriert wird. Dabei haben sowohl das als Ring ausgebildete innere Verankerungsteil 7 als auch der Zapfen 12 abschnittsweise einen sich in Einführrichtung des ersten Lagerteils 4 sich kegelförmig verringernden Durchmesser.

Weiterhin ist an dem inneren Verankerungsteil 7 an dessen der Fahrerkabine 1 zugewandten Seite ein radial nach außen erweiterter Abschnitt 16 ausgebildet, der eine Auflage für einen Stützkörper 17 bildet. Dieser einerseits an der Fahrerkabine 1 und andererseits an dem Abschnitt 16 anliegende Stützkörper wird in der Fahrposition der Fahrerkabine 1 durch deren Gewicht vorgespannt und verhindert so eine unerwünschte Bewegung zwischen Fahrerkabine 1 und dem inneren Verankerungsteil 7.

An dem inneren Verankerungsteil 7 ist an dessen der Fahrerkabine 1 abgewandten Seite ein radial nach außen erweiterter Abschnitt 18 vorgesehen. Der Außendurchmesser dieses rotationssymmetrisch ausgebildeten Abschnitt 18 ist dabei wenigstens genau so groß wie der Außendurchmesser des äußeren Verankerungsteils 8, so dass der Abschnitt 18 und das äußere Verankerungsteil 8 gemeinsam eine Abreißsicherung bilden.

Um die Fahrerkabine 1 sicher in der in Figur 1 dargestellten Fahrposition zu halten, ist eine Verriegelung 19 vorgesehen, durch die die Fahrerkabine 1 in der Fahrposition festgelegt wird. Die Verriegelung 19 weist ein Verriegelungselement 20 auf, welches den radial nach außen erweiterten Abschnitt 16 des inneren Verankerungsteils 7 hintergreift. Das Verriegelungselement 20 kann aus seiner in Figur 1 dargestellten Verriegelungsposition über eine Drehachse 21, welche über einen Hebel 22 betätigbar ist, in eine Freigabeposition gedreht werden, in der die Fahrerkabine 1 in die Serviceposition angehoben werden kann. Alternativ könnte eine Verriegelung auch derart vorgesehen werden, die ein Verriegelungselement aufweist, das zwischen dem Zapfen 12 und dem inneren Verankerungsteil 7 wirkt (nicht dargestellt).

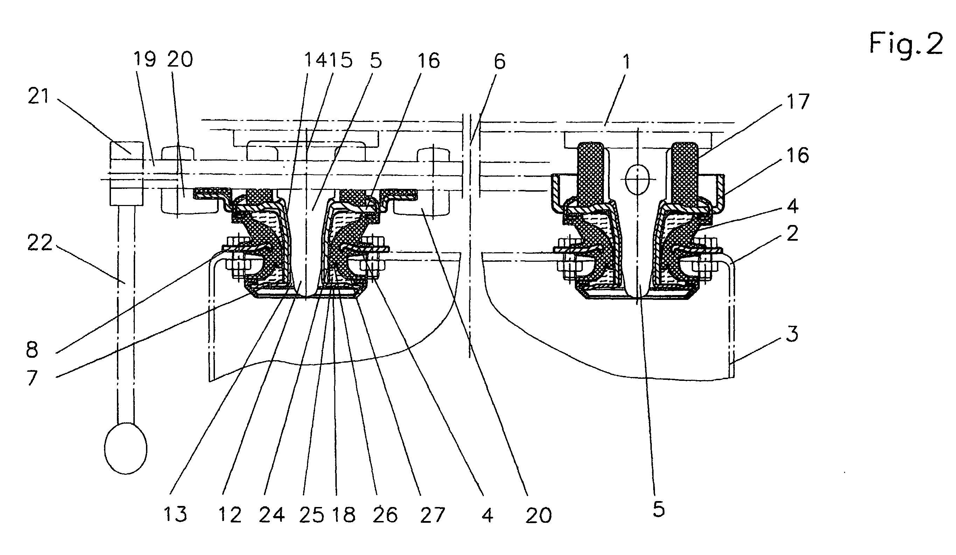

Die in Figur 2 dargestellte weiter Ausführungsform einer erfindungsgemäßen Lagerung entspricht weitgehend der in Figur 1 dargestellten Ausführungsform, weshalb Teile mit gleicher Funktion mit denselben Bezugsziffem versehen sind.

Zur Schwingungsdämpfung zwischen Fahrzeugrahmen 3 und Fahrerkabine 1 weist das zweite Lagerteil 4 eine hydraulische Dämpfung auf. Hierzu ist in dem ersten Lagerteil 4 eine mit Dämpfungsflüssigkeit gefüllte erste Kammer 23 und eine von diesem getrennte und über einen Durchlass 24 flüssigkeitsleitend mit der ersten Kammer 23 verbundene zweite Kammer 25 vorgesehen. Das Volumen der ersten Kammer 23 wird bei einer Relativbewegung von innerem und äußerem Verankerungsteil 7, 8 verändert, so dass Dämpfungsflüssigkeit in dem Durchlass 24 zwischen der ersten Kammer 23 und der zweiten Kammer 25 bewegt wird.

Die erste Kammer 23 und die zweite Kammer 25 sind zwischen dem inneren und dem äußeren Verankerungsteil 7, 8 angeordnet. Die erste Kammer 23 wird durch den Federkörper 9 und das innere Verankerungsteil 7 begrenzt. Der Durchlass 24 ist als ein von dem inneren Verankerungsteil 7 und dem äußeren Verankerungsteil 8 begrenzter ringförmiger Spalt ausgebildet. Hierzu ist an dem äußeren Verankerungsteil 8 ein Drosselelement 26 ausgebildet. Das Drosselelement 26 besteht aus elastischem Werkstoff und ist einstückig mit dem Federkörper 9 ausgebildet. Durch die elastische Ausbildung werden auch Bewegungen quer zur Zapfenachse 12 beziehungsweise zur Fahrzeugmittelachse 6 ermöglicht.

Das Drosselelement 26 weist einen zu der zweiten Kammer 25 hinweisenden im wesentlichen zylindrischen Abschnitt auf, wobei der zylindrische Abschnitt in seiner Bodenfläche eine Durchbrechung aufweist, welche mit dem inneren Verankerungsteil den Spalt bildet. Dadurch steht dem Durchtritt von Dämpfungsflüssigkeit aus der ersten Kammer 23 in die zweite Kammer 25 ein geringerer Widerstand entgegensteht als dem Durchtritt von Dämpfungsflüssigkeit aus der zweiten Kammer 25 in die erste Kammer 23.

Die zweite Kammer 25 wird einerseits durch einen radial nach außen erweiterten Abschnitt des inneren Verankerungsteils 7 und andererseits durch eine elastische Wandung 27 begrenzt. Letztere ist zwischen dem radial nach außen erweiterten Abschnitt 18 und dem Flansch 10 des äußeren Verankerungsteils 8 abgeordnet. Die elastische Wandung 27 ermöglicht es dabei, eine unterschiedlich große Menge an Dämpfungsflüssigkeit in der zweiten Kammer 25 aufzunehmen.

## Patentansprüche

1. Lagerung einer Fahrerkabine (1) an einem Fahrzeugrahmen (3), mit einem ersten und einem zweiten Lagerteil (4, 5), wobei das eine von diesen an der Fahrerkabine (1) und das andere am Fahrzeugrahmen (3) vorgesehenen ist und mit einer zwischen Fahrzeugrahmen (3) und Fahrerkabine (1) wirkenden Schwingungsdämpfung, wobei das erste Lagerteil (4) ein inneres Verankerungsteil (7) und ein relativ zu dem inneren Verankerungsteil (7) bewegbares äußeres Verankerungsteil (8) aufweist, wobei das äußere Verankerungsteil (8) das innere Verankerungsteil (7) radial umschließt und wobei zwischen dem inneren und dem äußeren Verankerungsteil (7, 8) ein Federkörper (9) wirkt, **dadurch gekennzeichnet, dass** die Fahrerkabine (1) relativ zu dem Fahrzeugrahmen (3) insbesondere schwenkend aus einer Fahrposition in eine Serviceposition angehoben und aus der Serviceposition in die Fahrposition abgesenkt werden kann, dass das erste und das zweite Lagerteil (4, 5) beim Anheben der Fahrerkabine (1) in die Serviceposition von einander getrennt und beim Absenken in die Fahrposition wieder zusammengefügt werden, dass in der Fahrposition das zweite Lagerteil (5) in einer an dem inneren Verankerungsteil (7) ausgebildeten Aufnahme aufgenommen ist und dass eine Zentriervorrichtung vorgesehen ist, die beim Absenken der Fahrerkabine (1) in die Fahrposition das erste Lagerteil (4) relativ zu dem zweiten Lagerteil (5) ausrichtet.

2. Lagerung nach Anspruch 1, **dadurch gekennzeichnet, dass** das zweite Lagerteil (5) als Zapfen (12) ausgebildet ist, von dem wenigstens ein Abschnitt in der Aufnahme aufnehmbar ist.

3. Lagerung nach Anspruch 1 oder 2, **dadurch gekennzeichnet, dass** die Zentriervorrichtung durch eine an dem zweiten Lagerteil (5) ausgebildete erste Führungsfläche (13) und eine mit dieser zusammenwirkende zweiten Führungsfläche (14), welche an der Aufnahme ausgebildet ist, gebildet wird.

4. Lagerung nach Anspruch 3, **dadurch gekennzeichnet, dass** die erste und/oder die zweite Führungsfläche (13, 14) derart geneigt sind, dass das zweite Lagerteil (4) beim Einführen in die Aufnahme zentriert wird.

5. Lagerung nach einem der Ansprüche 1 bis 4, **dadurch gekennzeichnet, dass** das innere Verankerungsteil (7) als Ring ausgebildet ist, dessen Ringöffnung die Aufnahme bildet.

6. Lagerung nach Anspruch 5, **dadurch gekennzeichnet, dass** der Ring wenigstens abschnittsweise einen sich in Einführrichtung des zweiten Lagerteils (4) insbesondere kegelförmig verringernden Durchmesser hat.

7. Lagerung nach Anspruch 5 oder 6, **dadurch gekennzeichnet, dass** an dem Ring an dessen der Fahrerkabine (1) zugewandten Seite ein radial nach außen erweiterter Abschnitt (16) vorgesehen ist, der eine Auflage für einen Stützkörper (17) bildet.

8. Lagerung nach einem der Ansprüche 1 bis 7, **dadurch gekennzeichnet, dass** eine Verriegelung (19) vorgesehen ist, durch die die Fahrerkabine (1) in der Fahrposition festgelegt wird.

9. Lagerung nach Anspruch 8, **dadurch gekennzeichnet, dass** die Verriegelung (19) ein Verriegelungselement (20) aufweist, das den radial nach außen erweiterten Abschnitt (16) hintergreift.

10. Lagerung nach Anspruch 8 oder 9, **dadurch gekennzeichnet, dass** die Verriegelung (19) ein Verriegelungselement (20) aufweist, das zwischen dem zweiten Lagerteil (5) und dem inneren Verankerungsteil (7) wirkt.

11. Lagerung nach einem der Ansprüche 5 bis 7, **dadurch gekennzeichnet, dass** an dem Ring an dessen der Fahrerkabine (1) abgewandten Seite ein radial-nach außen erweiterter Abschnitt (18) vorgesehen ist, der mit dem äußeren Verankerungsteil (8) eine Abreißsicherung bildet.

12. Lagerung nach einem der Ansprüche 1 bis 11, **dadurch gekennzeichnet, dass** eine zwischen dem ersten und dem zweiten Lagerteil (4, 5) wirkende hydraulische Dämpfung vorgesehen ist.

13. Lagerung nach Anspruch 12, **dadurch gekennzeichnet, dass** zur hydraulischen Dämpfung eine mit Dämpfungsflüssigkeit gefüllte erste Kammer (23) und eine von dieser getrennte und über einen Durchlass (24) flüssigkeitsleitend mit der ersten Kammer (23) verbundene zweite Kammer (25) vorgesehen ist, wobei das Volumen der ersten Kammer (23) bei einer Relativbewegung von innerem und äußerem Verankerungsteil (7, 8) verändert wird, so dass Dämpfungsflüssigkeit in dem Durchlass (24) zwischen der ersten Kammer (23) und der zweiten Kammer (25) bewegt wird.

14. Lagerung nach Anspruch 13, **dadurch gekennzeichnet, dass** die erste Kammer (23) und/oder die zweite Kammer (25) zwischen dem inneren und dem äußeren Verankerungsteil (7, 8) angeordnet sind.

15. Lagerung nach Anspruch 13 oder 14, **dadurch gekennzeichnet, dass** der Federkörper (9) die erste Kammer (23) wenigstens abschnittsweise begrenzt.

16. Lagerung nach einem der Ansprüche 13 bis 15, **dadurch gekennzeichnet, dass** der Durchlass (24) durch einen von dem inneren Verankerungsteil (7) und dem äußeren Verankerungsteil (8) begrenzten Spalt gebildet wird.

17. Lagerung nach Anspruch 16, **dadurch gekennzeichnet, dass** das äußere Verankerungsteil (8) zur Bildung des Spaltes ein sich um das innere Verankerungsteil (7) erstreckendes Drosselelement (26) aufweist.

18. Lagerung nach Anspruch 17, **dadurch gekennzeichnet, dass** das Drosselelement (26) aus elastischem Werkstoff besteht und insbesondere einstückig mit dem Federkörper (9) ausgebildet ist.

19. Lagerung nach Anspruch 17 oder 18, **dadurch gekennzeichnet, dass** das Drosselelement (26) einen zur zweiten Kammer (25) weisenden, im wesentlichen zylindrischen Abschnitt aufweist, wobei der zylindrische Abschnitt in seiner Bodenfläche eine Durchbrechung aufweist, welche mit dem inneren Verankerungsteil (7) den Spalt begrenzt.

## Claims

1. A bearing for a driver's cab (1) on a vehicle frame (3), the bearing having first and second bearing parts (4, 5), one of these being provided on the driver's cab (1) and the other on the vehicle frame (3), and having a vibration damping means which acts between the vehicle frame (3) and driver's cab (1), the first bearing part (4) having an internal anchoring part (7) and an external anchoring part (8) which can move in relation to the internal anchoring part (7), the external anchoring part (8) surrounding the internal anchoring part (7) radially, and a spring body (9) acting between the internal and the external anchoring parts (7, 8), **characterized in that** the driver's cab (1) can be lifted in relation to the vehicle frame (3), in particular lifted in a pivoting fashion out of a driving position into a service position and lowered from the service position into the driving position, **in that** the first and the second bearing parts (4, 5) are disconnected from one another when the driver's cab (1) is lifted into the service position and are assembled again when it is lowered into the driving position, **in that**, in the driving position, the second bearing part (5) is accommodated in a receptacle formed on the internal anchoring part (7), and **in that** a centring device is provided which aligns the first bearing part (4) in relation to the second bearing part (5) when the driver's cab (1) is lowered into the driving position.

2. A bearing according to claim 1, **characterized in that** the second bearing part (5) is embodied as a pin (12), at least one section of which can be accommodated in the receptacle.

3. A bearing according to claim 1 or 2, **characterized in that** the centring device is formed by a first guide face (13), which is formed on the second bearing part (5), and a second guide face (14), which interacts with the latter and is formed on the receptacle.

4. A bearing according to claim 3, **characterized in that** the first and/or the second guide faces (13, 14) are inclined in such a way that the second bearing part (5) is centred when it is introduced into the receptacle.

5. A bearing according to any of claims 1 to 4, **characterized in that** the internal anchoring part (7) is embodied as a ring whose ring opening forms the receptacle.

6. A bearing according to claim 5, **characterized in that** at least in certain sections the ring has a diameter which decreases in particular in a conical shape in the direction of introduction of the second bearing part (5).

7. A bearing according to claim 5 or 6, **characterized in that** a section (16) which is expanded radially outwards and which forms a support for a supporting body (17) is provided on the ring on its side facing the driver's cab (1).

8. A bearing according to any of claims 1 to 7, **characterized in that** a locking means (19) is provided which secures the driver's cab (1) in the driving position.

9. A bearing according to claim 8, **characterized in that** the locking means (19) has a locking element (20) which engages behind the section (16) which widens radially towards the outside.

10. A bearing according to claim 8 or 9, **characterized in that** the locking means (19) has a locking element (20) which acts between the second bearing part (5) and the internal anchoring part (7).

11. A bearing according to any of claims 5 to 7, **characterized in that** a section (18) which widens radially towards the outside and which forms a tear-off protection with the external anchoring part (8) is provided on the ring on its side facing away from the driver's cab (1).

12. A bearing according to any of claims 1 to 11, **characterized in that** a hydraulic damping means which acts between the first and the second bearing parts (4, 5) is provided.

13. A bearing according to claim 12, **characterized in that**, for the sake of hydraulic damping, a first chamber (23) which is filled with damping fluid and a second chamber (25) which is separated from the first chamber (23) and is connected thereto in a fluid-conducting fashion via a passage (24) are provided, the volume of the first chamber (23) being changed when there is a relative movement between the internal and external anchoring parts (7, 8) so that damping fluid is moved in the passage (24) between the first chamber (23) and the second chamber (25).

14. A bearing according to claim 13, **characterized in that** the first chamber (23) and/or the second chamber (25) are arranged between the internal and external anchoring parts (7, 8).

15. A bearing according to claim 13 or 14, **characterized in that** the spring body (9) bounds the first chamber (23) at least in certain sections.

16. A bearing according to any of claims 13 to 15, **characterized in that** the passage (24) is formed by the gap which is bounded by the internal anchoring part (7) and the external anchoring part (8).

17. A bearing according to claim 16, **characterized in that**, in order to form the gap, the external anchoring part (8) has a throttle element (26) which extends around the internal anchoring part (7).

18. A bearing according to claim 17, **characterized in that** the throttle element (26) is composed of elastic material and is formed in particular in one piece with the spring body (9).

19. A bearing according to claim 17 or 18, **characterized in that** the throttle element (26) has an essentially cylindrical section which points towards the second chamber (25), the cylindrical section having, in its bottom face, a break-through which bounds the gap with the internal anchoring part (7).

## Revendications

1. Palier de support d'une cabine conducteur (1) sur un châssis (3), équipé d'un premier et d'un second élément de support (4, 5), l'un de ceux-ci étant prévu sur la cabine conducteur (1) et l'autre sur le châssis (3) et équipé d'un amortisseur de vibrations agissant entre le châssis (3) et la cabine conducteur (1), le premier élément de support (4) présentant un élément d'ancrage intérieur (7) et un élément d'ancrage (8) extérieur mobile par rapport à l'élément d'ancrage intérieur (7), l'élément d'ancrage extérieur (8) entourant radialement l'élément d'ancrage intérieur (7) et un corps élastique (9) agissant entre l'élément d'ancrage intérieur et l'élément d'ancrage extérieur (7, 8), **caractérisé en ce que** la cabine conducteur (1) peut être soulevée par rapport au châssis (3) en pivotant notamment à partir d'une position de conduite en une position de service et abaissé de la position de service en position de conduite, **en ce que** le premier et le second élément de support (4, 5) sont séparés lors du soulèvement de la cabine conducteur (1) en position de service pour être à nouveau réunis lors de la descente en position de conduite, **en ce que** en position de conduite le second élément de support (5) est logé dans un logement formé sur l'élément d'ancrage intérieur (7) et **en ce qu'**un dispositif de centrage est prévu, qui aligne le premier élément de support (4) par rapport au second élément de support (5) lors de la descente de la cabine conducteur (1) en position de conduite.

2. Palier de support selon la revendication 1, **caractérisé en ce que** le second élément de support (5) est conçu comme un téton (12), dont au moins une section peut être logée dans le logement.

3. Palier de support selon la revendication 1 ou 2, **caractérisé en ce que** le dispositif de centrage est formé par une première surface de guidage (13) réalisée sur le second élément de support (5) et par une seconde surface de guidage (14) coopérant avec celle-ci, laquelle est formée sur le logement.

4. Palier de support selon la revendication 3, **caractérisé en ce que** la première et/ou la seconde surface de guidage (13, 14) est inclinée de telle sorte que le second élément de support (4) est centré lors de son introduction dans le logement.

5. Palier de support selon l'une des revendications 1 à 4, **caractérisé en ce que** l'élément d'ancrage intérieur (7) est conçu comme un anneau, dont l'ouverture forme le logement.

6. Palier de support selon la revendication 5, **caractérisé en ce que** l'anneau possède, au moins par sections, un diamètre diminuant notamment en forme de cône dans le sens de l'introduction du second élément de support (4).

7. Palier de support selon la revendication 5 ou 6, **caractérisé en ce que** sur la face de l'anneau tourné vers la cabine conducteur (1) une section (16) élargie radialement vers l'extérieur est prévue, qui forme un support pour le corps d'appui (17).

8. Palier de support selon l'une des revendications 1 à 7, **caractérisé en ce qu'**un verrouillage (19) est prévu, par l'intermédiaire duquel la cabine conducteur (1 ) est fixée en position de conduite.

9. Palier de support selon la revendication 8, **caractérisé en ce que** le verrouillage (19) présente un élément de verrouillage (20), qui saisit par l'arrière la section (16) élargie radialement vers l'extérieur.

10. Palier de support selon la revendication 8 ou 9, **caractérisé en ce que** le verrouillage (19) présente un élément de verrouillage (20), qui agit entre le second élément de support (5) et l'élément d'ancrage intérieur (7).

11. Palier de support selon l'une des revendications 5 à 7, **caractérisé en ce que** sur la face de l'anneau opposée à la cabine conducteur (1) est prévue une section (18) élargie radialement vers l'extérieur, qui forme une sécurité antirupture avec l'élément d'ancrage extérieur (8).

12. Palier de support selon l'une des revendications 1 à 11, **caractérisé en ce qu'**un amortisseur hydraulique agissant entre le premier et le second élément de support (4, 5) est prévu.

13. Palier de support selon la revendication 12, **caractérisé en ce que** pour l'amortissement hydraulique, une première chambre (23) remplie de liquide d'amortissement et une seconde chambre (25) séparée de celle-ci et coopérant avec la première chambre (23) de manière à conduire le liquide au moyen d'un passage (24), sont prévus, le volume de la première chambre (23) étant modifié en cas de mouvement relatif de l'élément d'ancrage intérieur et de l'élément d'ancrage extérieur (7, 8), si bien que le liquide d'amortissement est déplacé dans le passage (24) entre la première chambre (23) et la seconde chambre (25).

14. Palier de support selon la revendication 13, **caractérisé en ce que** la première chambre (23) et/ou la seconde chambre (25) est disposée entre l'élément d'ancrage intérieur et l'élément d'ancrage extérieur (7, 8).

15. Palier de support selon la revendication 13 ou 14, **caractérisé en ce que** le corps élastique (9) limite la première chambre (23) tout du moins par sections.

16. Palier de support selon l'une des revendications 13 à 15, **caractérisé en ce que** le passage (24) est formé par une fente limitée par l'élément d'ancrage intérieur (7) et l'élément d'ancrage extérieur (8).

17. Palier de support selon la revendication 16, **caractérisé en ce que** l'élément d'ancrage extérieur (8) présente, pour la formation de la fente, un élément d'étranglement (26) s'étendant autour de l'élément d'ancrage intérieur (7).

18. Palier de support selon la revendication 17, **caractérisé en ce que** l'élément d'étranglement (26) est constitué d'un matériau élastique et constitue notamment un bloc unique avec le corps élastique (9).

19. Palier de support selon la revendication 17 ou 18, **caractérisé en ce que** l'élément d'étranglement (26) présente une section essentiellement cylindrique orientée vers la seconde chambre (25), la section cylindrique présentant une traversée à sa surface de base, laquelle limite la fente avec l'élément d'ancrage intérieur (7).
